# EUROPÄISCHE PATENTANMELDUNG

(11) **EP 0 563 659 A1**
(43) Veröffentlichungstag der Anmeldung: **06.10.1993**
(21) Anmeldenummer: 93104108.1
(22) Anmeldetag: 13.03.1993
(51) Int. Cl.: E04H 5/04, E04B 1/98, H02B 7/06

(54) **Explosionsgeschützte Stahlbetonraumzelle, insbesondere Stahlbetonraumzellentrafostation**

(30) Priorität: 28.03.1992 DE 4210248
(71) Anmelder: SEPRO & CO., London SW1X 0NB (GB)
(72) Erfinder: Bierwirth, Rolf. Dr., D-44536 Lünen (DE)
(74) Vertreter: Herrmann-Trentepohl, Werner, Dipl.-Ing.

(57) **Zusammenfassung**

Bei einer explosionsgeschützten Stahlbetonraumzelle, die insbesondere als Stahlbetonraumzellentrafostation dient und zur Entlüftung und Gefährdungsschutz im Bereich der Deckenscheibe eine Mehrzahl von Öffnungen aufweist, welche Verbindungen zwischen dem Innenraum und der Atmosphäre herstellen, wobei für die Öffnungen Abdeckbleche vorgesehen sind, welche den Innenraum gegen zusitzendes Niederschlagwasser schützen, ist erfindungsgemäß vorgesehen, daß die als Kassettenplatte (11) ausgebildete Raumzellendeckenscheibe (10) freitragend ausgebildet ist und zwischen ihren Auflagern (20, 21) die Öffnungen als durchgehende Schlitze ausgebildet sind, welche zwischen aufgehenden parallelen Wänden und umlaufenden Außenrippen (14, 15) der Kassettenplatte (11) ausgebildet sind, die zur Verschiebungssicherung der Deckenplatte dienen, und daß die die Rippen (14, 15) und die Oberseiten der Wände (6, 7) übergreifenden Abdeckbleche in den vier Ecken der Kassettenplatte (11) verbindungsfrei ausgebildet sind, wobei die zur Schlitzabdeckung dienenden Bleche für den Gefährdungsschutz als verformungsfähige Abdeckungen ausgebildet sind, während wenigstens an eine der als Auflager (20, 21) dienenden Kassettenrippen (18) einen oder mehrere Durchbrüche zur Abführung des Niederschlagwassers aufweist.

## Beschreibung

Die Erfindung betrifft eine explosionsgeschützte Stahlbetonraumzelle, insbesondere eine Raumzellentrafostation gemäß dem Oberbegriff des Anspruches 1.

Der Explosionsschutz der erfindungsgemäßen Stahlbetonraumzelle bezweckt im Falle einer Explosion im Inneren der Raumzelle den Schutz der unmittelbaren Umgebung und der sich in dieser aufhaltenden Person gegen umherfliegende Teile. Bei Trafostationen, welche aus einer Stahlbetonraumzelle bestehen, kann es hauptsächlich durch Kurzschluß zu explosionsartigen Entladungen kommen. Derartige Explosionen lassen sich nicht ausschließen, insbesondere bei Raumzellen, welche weitgehend ohne Aufsicht sind. Das ist u.a. bei Trafostationen der beschriebenen Art der Fall, die zur Umspannung der Fernleitungen auf die Versorgungsleitungen z.B. von Wohnsiedlungen entfernt, z.B. im Wald aufgestellt sind. Zwar sind explosionsgefährdete Raumzellen auf unterschiedliche Weise gegen im Inneren auftretende Explosionen geschützt und außerdem zwangsbelüftet. Die hierdurch notwendige Zwangsbelüftung ist jedoch nicht in der Lage, im Falle einer dennoch auftretenden Explosion den dadurch schlagartig eintretenden Überdruck im Innenraum der Raumzelle hinreichend schnell abzubauen, so daß es zu Zerstörungen und damit zu dem beschriebenen Gefährdungspotential kommt.

Der Explosionsschutz erfordert zum schnellen Abbau des Explosionsüberdruckes im Interesse der Standfestigkeit des Gebäudes hinreichend dimensionierte Öffnungen, welche den Innenraum mit der Atmosphäre verbinden. Im allgemeinen wird dabei von Prüfdrücken in der Größenordnung von beispielsweise 1,5 t/m² ausgegangen. Normalerweise führen solche Überdrücke zur sofortigen, mindestens teilweisen Zerstörung einzelner oder mehrerer Scheiben des Gebäudes mit einem entsprechenden Gefährdungspotential durch umherfliegende Teile. Andererseits müssen derartige Raumzellen gegen das Eindringen von Niederschlagwasser geschützt werden. Bei hinreichend groß bemessenen Öffnungen zum Abbau des inneren Überdruckes macht deren Abdichtung erhebliche Schwierigkeiten.

Es ist bekannt, die Öffnungen so anzulegen, daß ein Gefälle entsteht, welche das Niederschlagwasser nicht überwinden kann. Zum Schutz gegen Winddrücke werden dabei Abdeckbleche benutzt. Es hat sich herausgestellt, daß derartige Raumzellen in der Praxis den Anforderungen im allgemeinen nicht genügen. Entweder werden die geforderten Abdichtungen nicht erreicht oder der Explosionsversuch führt zu den gefürchteten Zerstörungen und dem beschriebenen und auszuschließenden Gefährdungspotential.

Die Erfindung geht demgegenüber einen anderen Weg, dessen Grundgedanke im Anspruch 1 wiedergegeben ist. Weitere Merkmale der Erfindung sind Gegenstand der Unteransprüche.

Gemäß der Erfindung wird der notwendige schnelle Abbau von Explosionsüberdrücken über entsprechend bemessene Öffnungen durch Schlitze gewährleistet, welche sich zu beiden Seiten der Raumzellendeckenscheibe erstrecken. Längs dieser Schlitze liegt die die Deckenscheibe bildende Kassettenplatte hohl. Da sie jedoch an zwei ihrer einander gegenüberliegenden Enden auf aufgehenden Wänden unterstützt ist, bleibt sie im Falle einer Explosion, wie entsprechende Versuche gezeigt haben, unbeschädigt und auf ihren Auflagern liegen.

Die Ausbildung der Deckenscheibe als Kassettenplatte ermöglicht einerseits eine ihrer freitragenden Auflagerung entsprechende Bewehrung, die hauptsächliche Längsbewehrung ist in den Kassettenrippen untergebracht. Darüberhinaus schaffen die äußeren Kassettenrippen auch die Voraussetzungen für eine sichere Abdichtung der Schlitze gegen Niederschlagwasser, da sie und die dazugehörigen Wände von den Abdeckblechen übergriffen werden. Die Abdeckbleche sind jedoch durch ihre Verbindungsfreiheit in den vier Ecken der Kassettenplatte und durch ihre Verformungsfähigkeit daran gehindert, den Druckabbau durch die Schlitze zu verzögern. Vielmehr werden die Schlitzabdeckungen von den austretenden Explosionsgasen augenblicklich nach oben gebogen, wie sich gezeigt hat und geben dadurch die Schlitzöffnungen vollständig frei.

Die Ausbildung der Deckenscheibe als Kassettenplatte führt weiter dazu, daß sich auf der Oberseite der Deckenscheibe eine von den Rippen begrenzte Wanne bildet, in der sich das Niederschlagwasser fängt. Da man erfindungsgemäß das Niederschlagwasser laufend mit wenigstens einem Durchbruch durch die betreffende Kassettenrippe nach außen abführt, können auftretende Winddrücke das Niederschlagwasser nicht unter den Abdeckblechen in die Schlitze treiben mit dem Ergebnis, daß das Innere der Raumzelle trocken bleibt.

Die Erfindung hat den Vorteil, daß sie auf einfache Weise den gestellten Anforderungen an derartige Stahlbetonraumzelle zu genügen vermag. Die Explosionssicherheit und die Abdichtung werden praktisch ohne zusätzliche Maßnahmen mit Sicherheit erreicht. Insbesondere ist die Montage der vorgefertigten Stahlbetonraumzelle am Aufstellungsort bei Verwirklichung der Erfindung nicht erschwert.

Vorzugsweise wird erfindungsgemäß dafür gesorgt, daß sich die die Deckenscheibe bildende Kassettenplatte unter der Einwirkung eines Explosionsdruckes nicht gegenüber ihren Auflagern verschieben kann. Dies erfogt normalerweise in den vier Hauptrichtungen in der Ebene der Kassettenplatte gemäß den Merkmalen des Anspruches 2. Hierdurch wird erreicht, daß bei einer Explosion im Inneren der Raumzelle das Gebäude praktisch unbeschädigt bleibt.

Im einzelnen kann die Verschiebungssicherheit auch mit den Merkmalen des Anspruches 3 erreicht werden. Hierbei sorgt die Aussparung einer Kassettenrippe für einen Formschluß, der auch in den vier Hauptrichtungen wirksam sein kann. Gegebenenfalls, dh. wenn die Verschiebungssicherheit durch eine Kombination erreicht werden soll, werden beide Auflager in dieser Weise ausgebildet.

Die Kassettenplatte benötigt im Prinzip nur die Außenrippe, welche die beschriebenen Aufgaben übernimmt. Die von der umlaufenden Außenrippe begrenzte Plattenoberseite bildet dann den Boden der beschriebenen Wanne, deren Fassungsvermögen von der Höhe der umlaufenden Außenrippe bestimmt wird. Diese Ausbildung der Erfindung ist Gegenstand des Anspruches 4.

Da die meisten der erfindungsgemäßen Raumzellen unbeaufsichtigt sind und daher wartungsfrei sein müssen, muß gegebenenfalls Vorsorge dagegen getroffen werden, daß der Entwässerungsdurchbruch blockiert wird. Das kann nach längeren Standzeiten durch Verschmutzungen der Wanne, insbesondere durch Laub, Staub und ähnliche Fremdkörper der Fall sein. Für diese Fälle sind die Merkmale des Anspruches 5 vorgesehen. Hierbei wird davon ausgegangen, daß sich bei blockiertem Durchbruch Niederschlagwasser in der Wanne sammelt, eine Überschwemmung der umlaufenden Außenrippe jedoch durch die Notentwässerung verhindert wird, welche durch Durchbrüche erfolgt, die in der Höhe des höchst möglichen Niederschlagspiegels in der Kassette münden. Dadurch wird dafür gesorgt, daß die Notentwässerung nicht ebenso wie die Hauptentwässerung blockiert werden kann.

Es empfiehlt sich natürlich, die Entwässerung so zu gestalten, daß Niederschlagwasser nicht an den aufgehenden Wänden der Raumzelle herablaufen kann. Zu diesem Zweck sind die Merkmale des Anspruches 6 vorgesehen. Hierbei erfolgt die Hauptentwässerung durch ein senkrechtes Abflußrohr, mit dem das Niederschlagwasser gefaßt ist.

Die Wannenausbildung der Kassettenoberseite setzt naturgemäß voraus, daß Wasser nicht durch den Beton zusetzen kann. Eine Möglichkeit, sich hiergegen zu schützen, bieten die Merkmale des Anspruches 7. In diesem Falle führt der Sperrbeton zur Wasserdichtigkeit der gesamten Kassettenplatte, die den gewünschten Zweck erfüllt.

Eine ander Möglichkeit bietet der Anspruch 8. In diesem Falle ist die Oberseite der Kassettenplatte gegen eindringendes Wasser verwahrt. Das wird mit einer wassertragenden Schicht erreicht.

Wenn auf die zuvor beschriebene Weise die Abdichtung der Längsschlitze gewährleistet worden ist, muß dafür gesorgt werden, daß mit Sicherheit die Abdeckung der Längsschlitze durch Verformung der Abdeckbleche schnell genug erfolgt. Ein Mittel hierfür bilden die Merkmale des Anspruches 9. Hierbei wird nämlich lediglich die Abdeckung der Längsschlitze im Falle einer Explosion nach oben gedrückt und verformt, während die Abdeckung der Auflager unbeeinflußt bleibt. Die verformenden Kräfte sind dadurch reduziert. Da man die sich verformenden Abdeckbleche über Gehrungsschnitte anschließt, die verbindungsfrei sind, schützt man sich gleichzeitig davor, daß übermäßig Niederschlagwasser unter die Abdeckbleche gelangen kann.

Mit den Merkmalen des Anspruches 10 wird diese Möglichkeit ausgeschlossen. Die hiermit vorgeschlagenen Hauben sichern die Gehrungsschlitze gegen windgetriebenes Wasser.

Die Festigung der Abdeckbleche erfolgt erfindungsgemäß in der Weise, daß diese zwar wie vorgesehen festliegen, im Falle der Explosion jedoch die gewünschte Verformung an den Längsschlitzen eintritt. Eine Möglichkeit hierfür bieten die Merkmale des Anspruches 11. Bei dieser Ausführungsform der Erfindung dienen die zur Festlegung verwendeten Schienen an den Längsschlitzen außerdem dazu, eine Falzkante der Abdeckbleche zu bilden, sobald diese infolge ausströmender Explosionsgase nach oben verformt werden.

Die erfindungsgemäße Stahlbetonraumzelle wird zweckmäßig aus Großtafeln zusammengesetzt und montiert. Die Standsicherheit des Gebäudes bei Auftreten von Explosionen wird dabei mit den Merkmalen des Anspruches 12 gewährleistet.

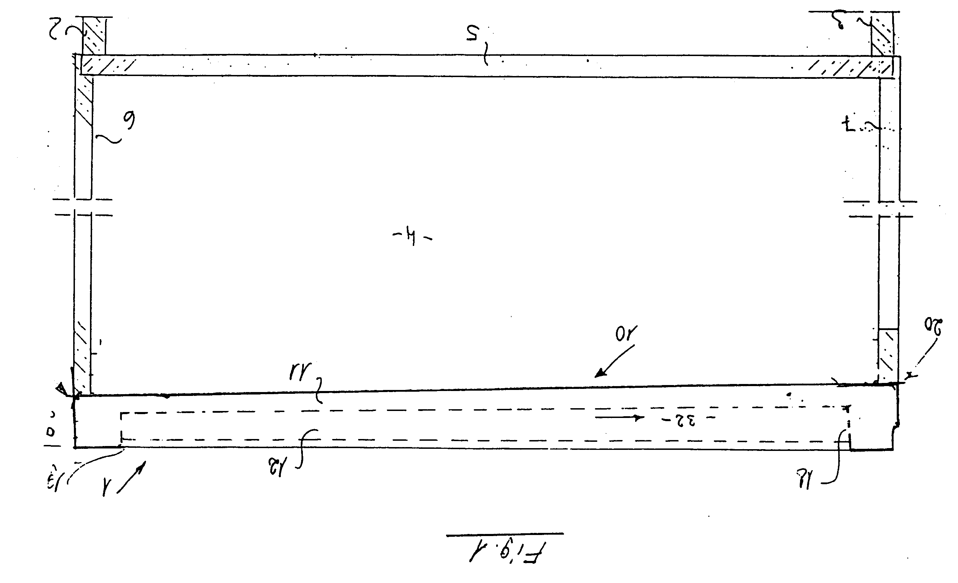

Die Einzelheiten, weiteren Merkmale und andere Vorteile der Erfindung ergeben sich aus der nachfolgenden Beschreibung eines Ausführungsbeispiels anhand der Figuren in der Zeichnung; es zeigen
- Fig. 1: einen Längsschnitt durch die erfindungsgemäße Stahlbetonraumzelle, wobei die Einrichtungen zur Aufstellung eines Transformators, sowie weiterer Ausrüstungen zum besseren Verständnis weggelassen sind,

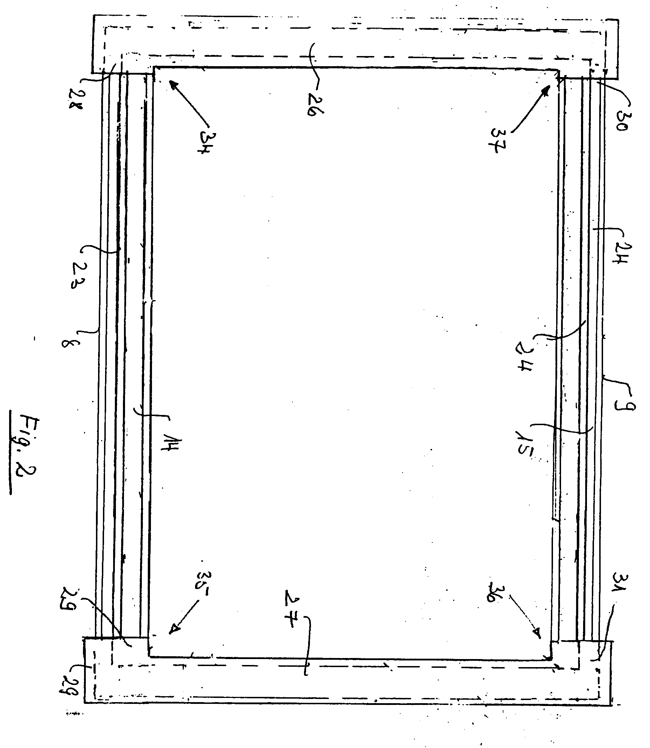

- Fig. 2: eine Draufsicht auf den Gegenstand der Fig. 1,
- Fig. 3: einen Schnitt durch eine der Längswände und die anschließende Kassettenplatte in abgebrochener Darstellung und
- Fig. 4: einen der Fig. 3 entsprechenden abgebrochenen Schnitt durch eine der Querwände der erfindungsgemäßen Stahlbetonraumzelle.

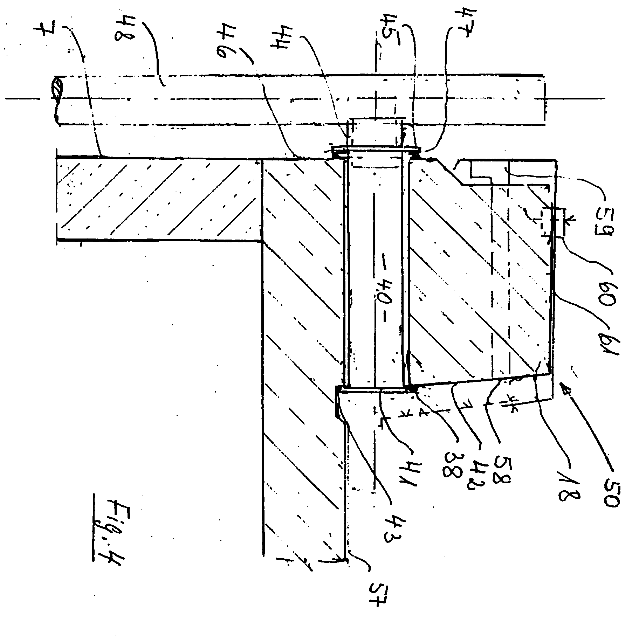

Das von der Stahlbetonraumzelle 1 gebildete Gebäude ruht auf Streifen- oder Punktfundamenten 2, 3. Im Ausführungsbeispiel besteht die Umfassung des Innenraumes 4 der Raumzelle 1 aus Großtafeln. Diese sind monolithisch ausgebildet und in den vier Ecken des Gebäudes explosionssicher verschweißt. Die Bodenscheibe 5 unterstützt die vier Wandscheiben, d.h. die kürzeren Querwände 6 bzw. 7 und die Längswände 8 bzw. 9. Die Deckenscheibe 10 besteht aus einer Kassettenplatte 11. Die Kassettenplatte hat eine umlaufende Außenrippe 12 und ist freitragend ausgebildet. Zu diesem Zweck sind die beiden Längsrippen 14, 15 als Tragrippen ausgebildet. Aus der Darstellung der Fig. 4 ergibt sich die Bewehrung in Form der in den Rippen untergebrachten Längsbalken 16 und der Querbalken 17.

Die Querrippen 18, 19 sind als Auflager 20, 21 vorgesehen und ausgebildet. Sie liegen mit ihren Unterseiten 22 auf den Querwänden 6, 7 auf.

Die Anordnung ist so getroffen, daß sich zwischen den Auflagern Schlitze 23, 24 ergeben, welche zwischen den aufgehenden parallelen Längswänden 8, 9 und den umlaufenden Außenrippen 14, 15 der Kassettenplatte 11 ausgebildet sind. Diese Längsschlitze 23, 24 sind Öffnungen, welche den Innenraum 25 mit der Außenatmosphäre verbinden. Normalerweise dienen diese Schlitze zur Entlüftung der zwangsbelüfteten Raumzelle 1. Im Falle einer Explosion wird der Überdruck im Inneren der Raumzelle durch die Längsschlitze 23, 24 abgebaut.

Die Verschiebungssicherung der Deckenscheibe 12 wird durch den Formschluß erreicht, der zwischen einer Aussparung 26 bzw. 27 und dem in dieser Aussparung liegenden oberen Ende der aufgehenden Querwände 6, 7 besteht, sobald die Kassettenplatte 11 auf die montierten aufgehenden Wände aufgelegt wird. Die Aussparung erfaßt auch die Enden 28, 29 bzw. 30, 31 der aufgehenden Längswände 14, 15, wodurch ein weiterer Formschluß erreicht wird, der die Querverschiebung der Kassettenplatte 11 auf den aufgehenden Wänden verhindert.

Gegen eindringendes Niederschlagwasser ist die Raumzelle 1 gesichert. Das Niederschlagwasser sammelt sich in einer Wanne 32, deren Gefälle nach vorn, d.h. in Richtung auf die vordere Querwand 7 durch einen Pfeil 33 gekennzeichnet ist. In einer der vier Ecken 35 bis 37 der Wanne bzw. der Kassettenplatte 11, nämlich in der Ecke 34 ist ein Entwässerungsdurchbruch 38 vorgesehen, welcher die Querrippe 18 durchsetzt. Die Abdichtung des Durchbruches 38 wird durch ein Rohr 40 erreicht, das den Durchbruch 38 auskleidet. Das Rohr ist mit einem Flansch 41 auf der Innenseite 42 der Querrippe 39 unter Zwischenschaltung eines Dichtungsringes 43 abgestützt und am anderen Ende mit einem Außengewinde 44 versehen. Ein auf das Gewinde aufgeschraubter Flanschring 45 verspannt das Rohr 40 auf der Außenseite 46 der Rippe 39 ebenfalls unter Zwischenschaltung einer Dichtung 47 und ist seitlich in ein senkrechtes Abflußrohr 48 geführt, durch das Niederschlagwasser von der Querwand 7 abgehalten und gefaßt ist.

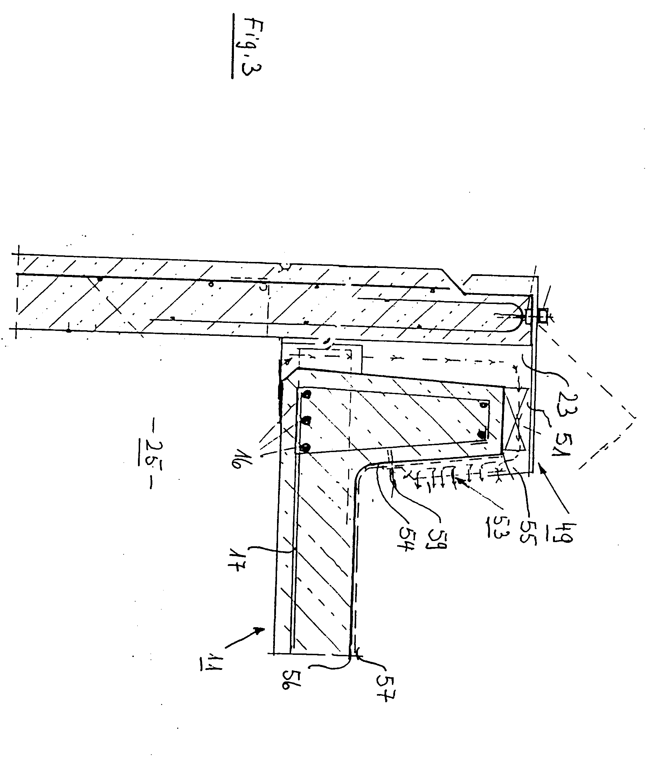

Die Rippen 14, 15 und die Querrippen 18, 19 sind mit Abdeckblechen verwahrt, die im Fall der Rippe 15 in Fig. 3 allgemein mit 49 und im Fall der Querrippe 18 in Fig. 4 allgemein mit 50 bezeichnet sind. Den gezeichneten Abdeckblechen 49, 50 entsprechen die nicht in den gezeichneten Schnitten dargestellten weiteren Abdeckbleche der restlichen Rippen. Diese Abdeckbleche sind in den vier Ecken 34 bis 37 der Kassettenplatte 11 verbindungsfrei ausgebildet, nämlich längs Gehrungsschnitten aneinandergelegt. Die zur Schlitzabdeckung dienenden Bleche, von denen eines in Fig. 3 mit 49 bezeichnet ist, sind für den Gefährdungsschutz als verformungsfähig Abdeckung ausgebildet. Einerseits können sie sich infolge der Verbindungsfreiheit mit den Abdeckblechen 50 der Querwände im Falle einer Explosion frei nach nach oben, wie aus der gestrichelten Darstellung bei 50 in Fig. 3 ersichtlich ist, biegen. Andererseits besteht durch mehrere Abstandshalter 51 auf der ebenen Oberseite 52 der Längsrippen zwischen den Auflagern genügend Raum, so daß die Explosionsgase durch die strichpunktierte und mit Pfeilen versehene Darstellung, wie in Fig. 3 ersichtlich ist, eine Durchtrittsmöglichkeit, die durch ein Lochblech 53 ergänzt wird, das sich parallel zur Innenseite 54 der betreffenden Längsrippe 14, 15 erstreckt. Diese Lochbleche sind an die inneren Flanschenden 55 der Abdeckbleche 50 lediglich angeheftet. Infolgedessen behindern die Lochbleche nicht die gewünschte Verformung der Abdeckbleche, wie sie aus der strichpunktierten Darstellung in Fig. 3 hervorgeht. Zwischen den Lochblechen 53 und den inneren Flanschenden der allgemein trapezförmigen Abdeckbleche 49, 50 bildet sich ein Schlitz 55 aus, durch den die Explosionsgase strömen, bevor sie durch die Löcher im Lochblech 53 in die Atmosphäre übertreten.

Zur Gewährleistung der Wasserdichtigkeit der beschriebenen Wanne 32 ist die Oberseite 56 der Kassettenplatte 11 mit einer Dachhaut 57 belegt. Die innere Kante 59 des Lochbleches 53 dient zur Verwahrung der Dachhaut 57 im Bereich der Längsschlitze 23, 24, die mit den Blechen 49, 50 abgedeckt sind. Die verschiebungssichere Festlegung der Kassettenplatte gewährleisten die Abstandshalter 51, welche die Schlitze offen halten.

Die Verwahrung der Dachhaut 57 im Bereich der Auflager unterscheidet sich jedoch darin von der Verwahrung im Bereich der Längsschlitze 23, 24, daß das Wasser unterhalb des Schlitzes 55 in das Rohr 40 eindringen kann, sobald in der Wanne Niederschlagwasser auftritt. Damit das Niederschlagwasser nicht die Längsrippen 14, 15 überspringen kann, sind Notabflüsse 58 oberhalb des Entwässerungsrohres 40 unterhalb des Maximalspiegels des Niederschlagwassers in der Wanne vorgesehen. Diese sind mit Rohren 59 ausgekleidet, werden jedoch nur erreicht, wenn die Hauptentwässerung durch das Rohr 40 blockiert ist.

Die Festlegung der Abdeckbleche 49 und 50 erfolgt einheitlich. Dazu dienen Klemmschienen 60, welche auf den Oberseiten 61 der Rippen angebracht sind. Im Fall der Abdeckbleche 49 dienen diese Schienen mit ihrer Innenseite als Falzkante beim Aufbiegen der Abdeckbleche unter dem Druck der ausströmenden Explosionsgase

Die Raumzelle wird mit ihren beschriebenen Scheiben in einem Fertigteilewerk hergestellt. Sie kann an Ort und Stelle nach Herstellung der Fundamente 2, 3 montiert werden. Nach dem Verschweißen der aufgehenden Wände wird die Deckenplatte aufgelegt, worauf die Abdeckbleche mit den Lochblechen montiert werden. Diese Arbeiten sind schnell durchzuführen, so daß eine rationelle Fertigung und Montage der explosionsgeschützten Stahlbeonraumzelle 1 gewährleistet ist.

## Patentansprüche

1. Explosionsgeschützte Stahlbetonraumzelle, insbesondere Stahlbetonraumzellentrafostation, welche zur Entlüftung und Gefährdungsschutz im Bereich der Deckenscheibe eine Mehrzahl von Öffnungen aufweist, welche Verbindungen zwischen dem Innenraum und der Atmosphäre herstellen, wobei für die Öffnungen Abdeckbleche vorgesehen sind, welche den Innenraum gegen zusitzendes Niederschlagwasser schützen, dadurch gekennzeichnet, daß die als Kassettenplatte (11) ausgebildete Raumzellendeckenscheibe (10) frei tragend ausgebildet ist und zwischen ihren Auflagern (20, 21) die Öffnungen als durchgehende Schlitze (24, 25) ausgebildet sind, welche zwischen den aufgehen-den parallelen Wänden (8, 9) und umlaufenden Außenrippen (14, 15) der Kassettenplatte (11) ausgebildet sind, die zur Verschiebungssicherung der Kassettenplatte (11) dienen, und daß die die Rippen (14, 15, 18, 19) und die Oberseiten der Wände (4, 6, 7) übergreifenden Abdeckbleche (49, 50) in den vier Ecken (34-37) der Kassettenplatte (11) verbindungsfrei ausgebildet sind, wobei die zur Schlitzabdeckung dienenden Bleche (49) für den Gefährdungsschutz als verformungsfähige Abdeckung ausgebildet sind, während wenigstens an eine der als Auflager (20, 21) der Kassettenplatte (11) dienenden Kassettenrippen (18) einen oder mehrere Durchbrüche (38) zur Abführung des Niederschlagwassers aus der Kassette aufweist.

2. Explosionsgeschützte Stahlbetonraumzelle nach Anspruch 1, dadurch gekennzeichnet, daß als Auflager (20, 21) und zur Verschiebungssicherung der Kassettenplatte (11) die beiden Querwände (6, 7) der Raumzelle (1) dienen und zur Verschiebungssicherung in Querrichtung auf den Längswänden (14, 15) Anschläge vorgesehen sind.

3. Explosionsgeschützte Stahlbetonraumzelle nach einem der Ansprüche 1 oder 2, dadurch gekennzeichnet, daß wenigstens eine zur VerschiebungsSicherung der Kassettenplatte (11) dienende Kassettenrippe (18, 19) für die Querwand (6, 7) ausgespart ist.

4. Explosionsgeschützte Stahlbetonraumzelle nach einem der Ansprüche 1 bis 3, dadurch gekennzeichnet, daß die Kassettenplatte (11) eine umlaufende Außenrippe (14, 15, 18, 19) aufweist, welche auf der Oberseite über die Plattenebene vorsteht und die Platte eine geneigte Entwässerungsfläche bildet, wobei die Entwässerung nach außen durch einen am Tiefsten der Entwässerungsfläche angeordneten Durchbruch (38) in der Kassettenrippe (18, 19) erfolgt.

5. Explosionsgeschützte Stahlbetonraumzelle nach einem der Ansprüche 1 bis 4, dadurch gekennzeichnet, daß dem zur Entwässerung dienenden Durchbruch (38) wenigstens ein zur Notentwässerung dienender weiterer Durchbruch (59) zugeordnet ist, der in der Höhe des höchst möglichen Niederschlagspiegels in der Kassette mündet.

6. Explosionsgeschützte Stahlbetonraumzelle nach einem der Ansprüche 1 bis 5, dadurch gekennzeichnet, daß der als Hauptentwässerung dienende Durchbruch (38) mit einem Rohr (40) ausgekleidet und an ein senkrechtes Abflußrohr (48) angeschlossen ist.

7. Explosionsgeschützte Stahlbetonraumzelle nach einem der Ansprüche 1 bis 6, dadurch gekennzeichnet, daß die Kassettenplatte (11) aus Sperrbeton besteht.

8. Explosionsgeschützte Stahlbetonraumzelle nach einem der Ansprüche 1 bis 6, dadurch gekennzeichnet, daß die Kassettenplatte (11) auf ihrer Oberseite (56) mit einer wassertragenden Schicht (57) versehen ist.

9. Explosionsgeschützte Stahlbetonraumzelle nach einem der Ansprüche 1 bis 8, dadurch gekennzeichnet, daß den aufgehenden Wänden (6-9) und den diesen zugeordneten Kassettenrippen (14, 15, 18, 19) Abdeckbleche (49, 50) einzeln zugeordnet und in den vier Ecken (34-37) längs Gehrungsschnitten einander angelegt sind, für die zur Abdichtung Hauben vorgesehen sind.

10. Explosionsgeschützte Stahlbetonraumzelle nach einem der Ansprüche 1 bis 9, dadurch gekennzeichnet, daß die Abdeckbleche (50) als verformungsfähige Abdeckung Lochbleche (45) aufweisen, wobei die Verformung in den Anschluß (55a) der Lochbleche (55) an die Abdeckbleche (50) gelegt ist.

11. Explosionsgeschützte Stahlbetonraumzelle nach einem der Ansprüche 1 bis 10, dadurch gekennzeichnet, daß die Abdeckbleche auf der Oberseite (61) der aufgehenden Wände (6-9) mit Hilfe von Schienen (60) festgelegt sind, längs derer die zur Schlitzabdeckung dienenden Bleche (59) verformbar sind.

12. Explosionsgeschützte Stahlbetonraumzelle nach einem der Ansprüche 1 bis 11, gekennzeichnet durch Großtafeln, welche die aufgehenden Wände (6-9), die Bodenscheibe (5) und die Kassettenplatte (11) bilden, wobei die die aufgehenden Wände (6-9) bildenden Großtafeln in den vier Ecken (34-37) der Raumzelle (1) explosionssicher miteinander verschweißt sind.
